# EUROPEAN PATENT APPLICATION

(11) **EP 1 624 283 A1**
(43) Date of publication of application: **08.02.2006**
(21) Application number: 05254912.8
(22) Date of filing: 05.08.2005
(51) Int. Cl.: G01C 17/02, G01C 17/38, G01R 33/02

(54) **Compass system for a motor vehicle**

(30) Priority: 05.08.2004 US 912399
(71) Applicant: Yazaki North America, Inc., Canton, Michigan 48187 (US)
(72) Inventor: Goslee, Nathan V., Ypsilanti, Michigan 48197 (US); Chlebek, Jeff J., Livonia, Michigan 48152 (US)
(74) Representative: Games, Robert Harland

(57) **Abstract**

A wiring system for a vehicle which includes a vehicle accessory, a power source, and a vehicle compass. The vehicle accessory is coupled to the power source by substantially parallel wires in close proximity to each other. The routing of the wires in parallel forms a current loop that reduces the amount of magnetic interference with the vehicle compass.

## Description

### TECHNICAL FIELD

The present invention relates generally to a compass system and more specifically to a compass system for use in vehicles.

### BACKGROUND

Compass systems for vehicles are commonly available. Such systems provide information to vehicle occupants pertaining to the vehicle's direction or heading. A typical system includes a magnetic sensor, a microprocessor, and a display unit. The magnetic sensor senses the magnetic field of the Earth, and the microprocessor processes the signals generated by the magnetic sensor and outputs the corresponding vehicle direction to the display unit. The accuracy of the compass system, however, may be diminished depending upon the physical location of the magnetic sensor within the vehicle. For instance, placement of the magnetic sensor in close proximity to vehicular components, accessories, or current carrying conductors has been found to have such an affect.

Current carrying conductors emit magnetic fields. The strengths of the magnetic fields are a function of the amount of electric current flowing within the conductors. Accordingly, accessories such as heating ventilation and air conditioning (HVAC) blower motors and window defroster systems, which have a high current draw, generate correspondingly strong magnetic fields. These magnetic fields interfere with the ability of the magnetic sensor to sense the Earth's magnetic field, thereby introducing an appreciable amount of error in the compass system. In response, designers have developed various systems and methods to remedy the affects of magnetic interference. One approach for reducing the affects of magnetic interference is to monitor the amount of current produced by accessories proximate to the magnetic sensor and generate "correction" signals that enable the microprocessor to produce a more accurate vehicular direction signal. A second and more common approach is to locate the magnetic sensor and processor a sufficient distance from current carrying conductors and accessories such that any created magnetic fields dissipate before having an appreciable affect on the magnetic sensor. Such an approach requires mounting the magnetic sensor in distant locations such as the vehicle's rear view mirror or headliner.

Although the foregoing methods may enable a more accurate compass system, system complexity increases while requiring additional hardware, software, and packaging considerations. It would be desirable, therefore, to provide a compass system that reduces the complexity of the aforementioned systems and enables both accurate detection of vehicle direction and placement of the magnetic sensor in close proximity to the instrument panel of the vehicle, unaffected by interfering magnetic fields.

### SUMMARY

The present invention overcomes the disadvantages of the prior art approaches by providing a wiring system for a motor vehicle that minimizes magnetic interference caused by current carrying conductors. Accordingly, the present invention requires minimal hardware and software while enabling accurate detection of vehicle direction and flexibility in locating a compass on the vehicle. The wiring system includes an instrument panel having at least one powered vehicle accessory and a vehicle compass. A power source provides electrical current to the vehicle accessory. The vehicle accessory is coupled to the power source by a pair of substantially parallel wires in close proximity to each other that form a current loop between the power source and the vehicle accessory. The routing of the closely spaced, substantially parallel wires enables cancellation of interfering magnetic fields created by the vehicle accessory.

### BRIEF DESCRIPTION OF THE DRAWINGS

Figure 1 is a wiring schematic of a system having a prior art wiring system.

Figure 2 is a wiring schematic for an instrument panel according to an embodiment of the present invention.

Figure 4 is a wiring schematic for an instrument panel according to an alternate embodiment of the present invention.

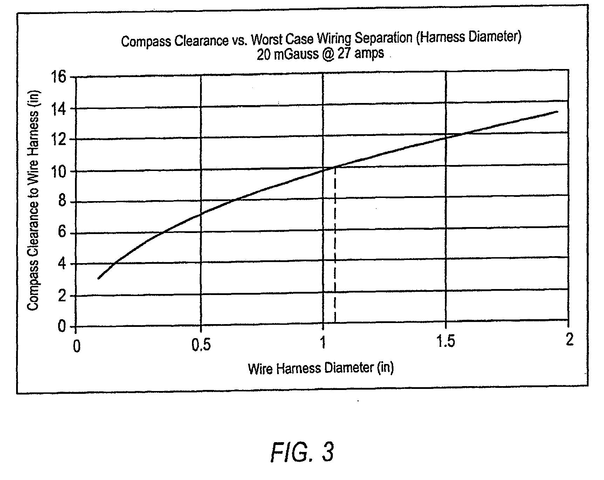

Figure 3 is a graph showing the recommended compass clearance in relation to the worst case, wire harness spacing between an accessory power and ground wire according to an embodiment of the present invention. In this scenario, the worst case wire harness spacing is equal to the wire harness diameter that contains the power and ground wires.

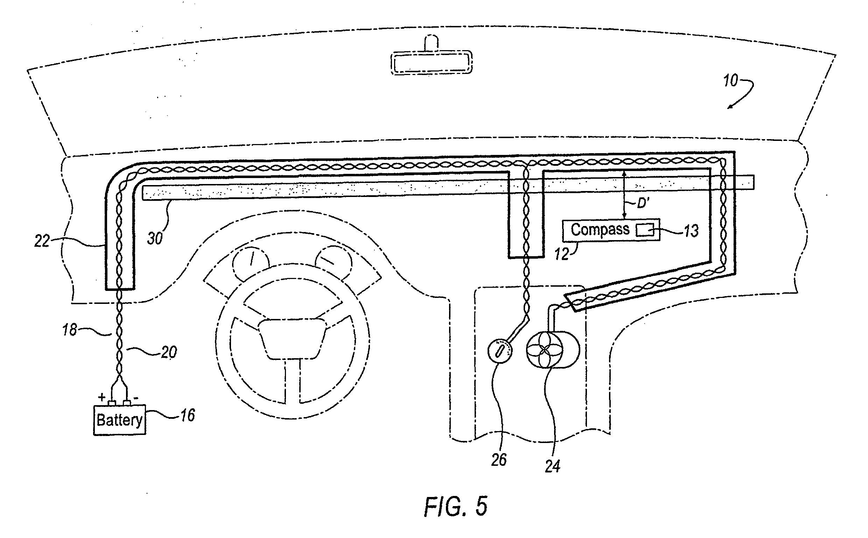

Figure 5 is a wiring schematic for an instrument panel according to yet another alternative embodiment of the present invention.

### DETAILED DESCRIPTION

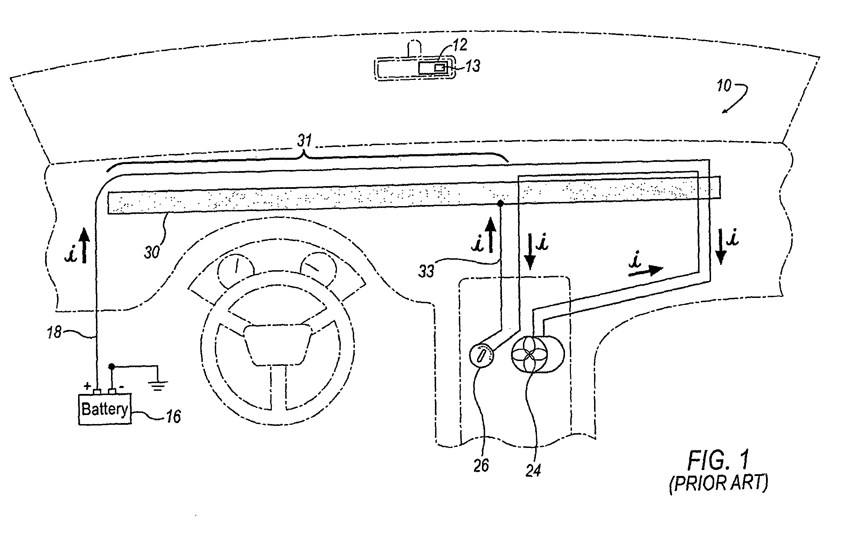

Referring now to the drawings, Figure. 1 shows a vehicle instrument panel 10 having a prior art wiring system. The instrument panel 10 includes a powered vehicle accessory 24 and an accessory controller 26. Additionally, the instrument panel 10 may extend from the floor board (not shown) of the vehicle to the windshield.

The vehicle accessory 24 as shown is a heating, ventilation, and air conditioning blower motor, but may alternatively be a radiator fan motor or any other electrically operated component such as a defroster system. The controller 26 allows a vehicle occupant to adjust the power setting of the vehicle accessory 24. Nevertheless, it is recognized that alternate embodiments may not include the accessory controller 26 that is adjustable by the vehicle occupant.

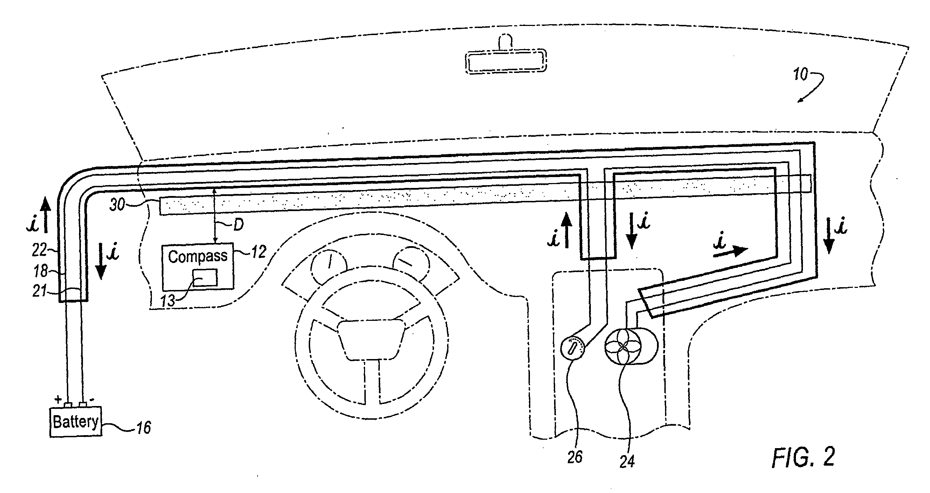

A cross car beam 30 provides structural support for the vehicle and instrument panel 10. The cross car beam 30 is constructed of a metallic material such as iron, steel, or aluminum. Because of the conductive properties of the cross car beam 30, it is commonly used as a grounding point for electrical accessories on the vehicle. A power source 16, such as a battery, supplies power to accessories within the vehicle. The vehicle accessory 24 is coupled to the power source 16 through a positive source wire 18. The flow of current i is indicated by arrows in Figure 1. The grounding point for the vehicle accessory 24 is the cross car beam 30. As shown at point 31, the short negative return wire 33 is terminated at the cross car beam 30 and is no longer "substantially parallel" and in close proximity to the positive source wire 18. As a result, the positive source wire produces an interfering magnetic field that propagates throughout the area of the instrument panel 10. The magnetic field may interfere with a compass module 12. The compass module 12 commonly includes a microprocessor (not shown) and a magnetic sensor 13. The microprocessor (not shown) is communicative with the magnetic sensor 13. The magnetic sensor 13 determines the heading of the vehicle based on the Earth's magnetic field and accordingly generates a signal indicative of the vehicle heading for the microprocessor. As shown in Figure 1, to reduce the effects of interfering magnetic fields, the compass 12 is mounted in the rear view mirror or alternatively, the headliner of the vehicle. The microprocessor processes the signals received by the compass 12 and outputs the vehicle heading to a display unit (not shown). For purposes of this application, the phrase "substantially parallel" when used to describe wires in a current loop means that at least a pair of wires forming a current loop are at least approximately parallel throughout all relevant portions of the current loop, as shown in Figure 2, and that the parallel wires carry a substantially equal amount of current in opposite directions relative to each other.

Referring to Figure 2, an embodiment of the inventive wiring system is shown. The system in Figure 2 contains similar elements to those shown in Figure 1. Hence, the elements in Figure 2 that are similar to Figure 1 are referred to by the same reference numbers.

Included in Figure 2 are the vehicle accessory 24, the accessory controller 26, and the power source 16. The vehicle accessory 24 is coupled to the power source 16 via the positive source wire 18 and an extended ground wire 21. As shown, the positive source wire 18 and the extended ground wire 21 are substantially parallel and in close proximity. More specifically, in substantially all locations in the current loop formed between the accessory 24, the accessory controller 26 (if present), and the power source 16, there are two wires carrying current in opposite directions, e.g., the positive source wire 18 and the extended ground wire 21. The flow of a substantially equal amount of current in opposite directions through wires that are substantially parallel and in close proximity to each other results in the cancellation of opposing magnetic fields created by the respective currents.

In Figure 1, the positive source wire 18 in section 31 is uncompensated. For purposes of this application, the phrase uncompensated means that there is no substantially parallel ground return wire in close proximity to the positive source wire 18. With uncompensated wires, the currents therein create undesired magnetic fields which may diminish compass accuracy. Hence, accurate detection of vehicle direction is dependent upon either mounting the compass significantly far from the uncompensated wire or by generating correction signals to offset the error which adds to system complexity.

The embodiment shown in Figure 2 overcomes the disadvantages of the prior art approaches by using a compensating ground wire to cancel the undesired magnetic field. Instead of the vehicle accessory 24 being grounded at the nearest chassis ground point (the cross car beam 30), the extended ground wire 21 couples the vehicle accessory 24 to a negative terminal of the power source 16. It is recognized that Figure 2 illustrates an exemplary embodiment for termination of the extended ground wire 21 at the power source 16. Alternate embodiments may include termination at grounding points in close proximity to the power source 16. For instance, in the event that the power source 16 is contained within an engine compartment of the vehicle, the extended ground wire 21 may terminate therein. Alternatively, if the power source 16 is contained within the trunk of the vehicle, the extended ground wire 21 may be routed to terminate within the trunk. The extended ground wire 21 may terminate at any location within the vehicle provided that the wires are substantially parallel and in close proximity to each other in relevant locations, particularly in and around the compass.

The extended ground wire 21 may be any conductor capable of withstanding the currents of vehicle accessories. For instance, the typical cooling system blower motor may operate at an average current of 27 Amps. Thus, the extended ground wire 21 will normally (though not necessarily) be capable of functioning at an average current of 27 Amps. As shown, the positive source wire 18 and the extended ground wire 21 are substantially parallel and contained within a wire harness 22. The wire harness 22 may have a diameter of less than 1.5 inches (3.81 cm). Accordingly, the compass module 12 may be mounted in a closer proximity to the instrument panel 10 than in the prior art system shown in Figure 1. As shown in Figure 2, the compass module 12 is mounted a predetermined distance D from the wire harness 22. In some embodiments, the predetermined distance D is about 11.5 inches (29.21 cm) when the diameter of the wire harness 22 is less than 1.5 inches (3.81 cm).

Figure 3 illustrates a graph of compass placement versus worst case separation between source wire and ground return wire. Note that the worst case separation equals the wire harness diameter if the source and ground return wire are not bound together. The graph may provide a general guide for preferable compass locations when wire harnesses of varying diameters are used. In addition, the data plotted in Figure 3 assumes a maximum interfering magnetic field of 20 mGauss. Accordingly, as illustrated in Figure 3, a vehicle with a positive source wire and ground wire spaced in this manner and contained within a wire harness having a diameter of approximately 1.05 inches (2.667 cm) should, in some embodiments, have the compass module mounted at least 10 inches (25.4 cm) away from the wire harness.

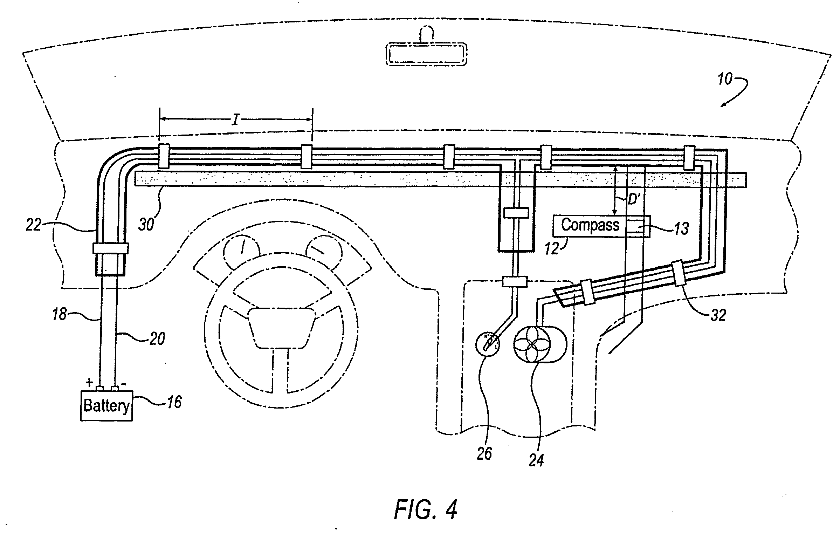

Referring to Figure 4, an alternative embodiment of a vehicle wiring system is shown having the positive source wire 18 and extended ground wire 21 routed in parallel and in close proximity and forming a current loop with the vehicle accessory 24 and accessory controller 26. In this embodiment, the positive source wire 18 and extended ground wire 21 may be bound together at intervals. Binding the wires at a defined interval I ensures minimum separation between the wires which results in a reduction of the interfering magnetic fields. For example, in one embodiment, the defined interval I may equal 0.5 inches (1.27 cm) in length. As shown in Figure 4, the wires may be bound together by an adhesive tape 32 or any other methods known in the art.

Referring to Figure 5, an alternative embodiment of a vehicle wiring system is shown having the positive source wire 18 and extended ground wire 21 routed in parallel and in close proximity and forming a current loop with the vehicle accessory 24 and accessory controller 26. In this embodiment, the positive source wire 18 and extended ground wire 21 may be routed in the form of a twisted pair. The twisted pair is constructed by physically twisting the positive source wire 18 and the extended ground wire 21 together in the form of a helix. Twisting the wires ensures minimum separation between the wires which results in a reduction of the interfering magnetic fields.

Rather than on the instrument panel, the compass and the wiring system of this invention could be utilized in other locations, such as a headliner, where the compass is mounted in close proximity to vehicle accessories or their power supply wires. Various other modifications to the present invention may occur to those skilled in the art to which the present invention pertains. Other modifications not explicitly mentioned herein are also possible and within the scope of the present invention. It is the following claims, including all equivalents, which define the scope of the present invention.

## Claims

1. A wiring system for reducing magnetic interference with a vehicle compass module, comprising:
at least one powered vehicle accessory and said vehicle compass module;
a power source for providing electrical current to said at least one vehicle accessory; and
at least one pair of substantially parallel wires forming a current loop between said power source and said at least one vehicle accessory.

2. A system according to claim 1, wherein said compass module is mounted adjacent to a cross-car beam of the vehicle.

3. A system according to claim 1, wherein said at least one powered vehicle accessory and said vehicle compass module are located on an instrument panel.

4. A system according to claim 1, wherein said pair of wires are contained within a wire harness.

5. A system according to claim 1, wherein said pair of wires are bound together at defined intervals.

6. A system according to claim 1, wherein said substantially parallel wires comprise a twisted pair.

7. A system according to claim 1, wherein said compass includes a magnetic sensor.

8. A system according to claim 1, wherein said vehicle accessory is a heating ventilation and air conditioner blower motor.

9. A system according to claim 1, wherein said vehicle accessory is a defroster.

10. A wire harness for reducing magnetic interference with a vehicle compass module, comprising:
at least one pair of substantially parallel wires configured to be routed in close proximity to a compass module, said at least one pair of substantially parallel wires configured to form a current loop wherein a first wire of said pair carries an amount of current in one direction and a second wire of said pair carries a substantially equal amount of current in an opposite direction.

11. A wire harness according claim 10, wherein said at least one pair of substantially parallel wires are routed throughout an instrument panel.

12. A wire harness according to claim 10, wherein said pair is bound at predefined intervals.

13. A wire harness according to claim 10, wherein said at least one pair of substantially parallel wires is routed in the form of a twisted pair.

14. A method of reducing magnetic interference with a vehicle compass, comprising the steps:
providing at least one powered vehicle accessory and a vehicle compass;
forming a current loop between said power source and said at least one vehicle accessory with at least one pair of substantially parallel wires in close proximity; and
generating current flow in said current loop.

15. A method according to claim 14 further including the step of locating the at least one powered vehicle accessory and the vehicle compass in an instrument panel.

16. A method according to claim 14, further including the step of mounting said compass module adjacent to a cross-car beam of the vehicle.

17. A method according to claim 14 wherein the step of forming a current loop between said power source and said at least one vehicle accessory further comprises routing said at least one pair of substantially parallel wires in a harness.

18. A method according to claim 14 wherein the step of forming a current loop between said power source and said at least one vehicle accessory with at least one pair of substantially parallel wires further comprises binding together at defined intervals said pair of substantially parallel wires.

19. A method according to claim 14, wherein the step of forming a current loop between said power source and said at least one vehicle accessory further comprises routing said at least one pair of substantially parallel wires in the form of a twisted pair.
